# EUROPEAN PATENT SPECIFICATION

(11) **EP 3 128 633 B1**
(45) Date of publication and mention of the grant of the patent: **26.07.2023**
(21) Application number: 16167457.7
(22) Date of filing: 28.04.2016
(51) Int. Cl.: H02H 9/04

(54) **TRANSIENT OVER VOLTAGE AND LIGHTNING PROTECTION OF POWER CONNECTED EQUIPMENT**
VORÜBERGEHENDE ÜBERSPANNUNGS UND BLITZSCHUTZ VON MIT EINER VERSORGUNGSSPANNUNG VERBUNDENEN APPARATEN
PROTECTION D'UN APPAREIL ELECTRIQUE CONTRE LES SURTENSIONS TRANSITOIRES ET LA FOUDRE

(30) Priority: 07.08.2015 EP 15002357
(43) Date of publication of application: 08.02.2017
(73) Proprietor: ABB AG, 68309 Mannheim (DE)
(72) Inventor: Herrington, Keith D., Cropwell Bishop Nottingham NG 12 3DY (GB)
(74) Representative: Wesch, Arno

(56) References cited:
- EP-A1- 1 551 089
- CN-A- 101 950 956
- US-A- 4 571 656
- US-B1- 6 226 166
- US-B1- 7 333 316

## Description

This invention relates to transient overvoltage and lightning protection of power connected equipment, and is particularly concerned with providing an improved circuit for providing such protection.

In particular, this invention relates to an overvoltage protection circuit according to the preamble of claim 1, comprising at least one energy-absorbing module, said energy-absorbing module including at least one metal-oxide varistor (MOV), a gas arrestor connected in series with said at least one MOV, said overvoltage protection circuit further including a transient discriminative module connected in parallel with the energy absorbing module, said transient discriminative module including an avalanche diode.

A circuit showing this technical features is known from US 6,226,166 B1. Further circuits comprising a gas arrestor are known from EP 1 551 089 A1, US 4,571,656 A and CN 101 950 956 A. US 7,333,316 B1 shows a circuit including a thyristor connected in series with a capacitor.

Power line transients are caused by line faults, switching of inductive circuits and power factor correction capacitors, lightning surges etc. Lightning surge peaks are rated in the low microsecond range. Other failures in the utility power supply to the protected equipment can include long -duration overvoltages, called transient over voltage (TOV), rated in the milliseconds range.

There are a few techniques and devices known to clamp such overvoltages, and there are a few key parameters which are dominant in describing their performance. These are the energy absorption ability of the device, the voltage clamping level for a given pulse current, the pulse polarity and wave shape, and the speed of response. Devices that have previously been used to achieve overvoltage protection from power line transients include Silicon Avalanche Diodes used as a transient voltage suppressor (TVS), Metal Oxide Varistors (MOVs), and Gas Arrestors in the form of a gas discharge tube (GDT). There have previously been proposed various combinations of the devices mentioned above for overvoltage and transient surge protection. For instance, it is possible to connect high voltage diodes in parallel across a power line to clamp transients on the power line and to provide a higher current rating than a single high voltage device. However, this is not necessarily good practice owing to the relatively wide production spread in voltage tolerance.

EP 0 974 181 B1 shows an overvoltage protection circuit comprising at least one energy-absorbing module; said energy absorbing module including at least one metal oxide varistor (MOV), a switching device connected in series with said at least one MOV, and a resistance or impedance connected in parallel with said switching device, said resistance or impedance forming a high pass filter with capacitance of the at least one MOV, including a plurality of series-connected avalanche diodes (TVSs) connected in parallel with the at least one energy-absorbing module. With the high pass filter, the majority of the applied mains voltage appears across the MOVs. This ensures that the Gas Arrester does not fire, but does cause a side effect. The MOV capacitance charges and discharges with the mains voltage frequency. Thus, if an impulse occurs when the MOV capacitance is fully charged, the breakover voltage of the gas arrester adds to the MOV capacitance voltage producing a higher letthrough voltage. Additionally, failures in the utility supply applying long duration voltages, the above mentioned TOVs in the millisecond range, could damage the TVSs.

It is therefore the object of the present invention to provide an improved overvoltage and lightning protection circuit and method for protecting electrical equipment from transients in which at least some of the disadvantages of the prior art are alleviated.

According to the invention the above object is achieved by an overvoltage protection circuit comprising including at least one energy-absorbing module, said energy-absorbing module including at least one metal-oxide varistor (MOV), a gas arrestor connected in series with said at least one MOV and a transient discriminative module connected in parallel with the energy absorbing module, said transient discriminative module including an avalanche diode, wherein the said at least one energy-absorbing module includes a resistance in parallel with said gas arrestor to form a potential divider circuit with the MOV which shares the voltage about equally across the MOV and the gas arrestor, and the said transient discriminative module including a series connection of the avalanche diode and a capacitor.

The resistor added in parallel to the gas arrestor creates a potential divider circuit with the MOV, which shares the voltage roughly equally across the MOV and the gas arrestor components, which allows to choose a gas arrestor with a lower DC sparkover and lower impulse sparkover than without the resistor added in parallel to the gas arrestor to create a potential divider circuit with the MOV. The capacitor in series with the avalanche diode effectively filters out transient overvoltages (TOVs) in the long-duration, milliseconds range. 50 Hz gives a high impedance of the capacitor and no operation of the avalanche diode. But at surges, having high frequency components, giving low impedance of the capacitor, makes the avalanche diode operate and clip the peaks from the gas arrestor operation of the parallel switched gas arrestor.

In a preferred embodiment of the invention, said energy-absorbing module and said transient discriminative module are connected across an AC power supply.

In a preferred embodiment of the invention, said energy-absorbing module and said transient discriminative module are connected across two power lines of an AC power supply or across a power line and the neutral line of an AC power supply.

The circuit includes a back-up module connected in parallel with said energy absorbing module, said backup module including at least one metal-oxide varistor (MOV).

In a preferred embodiment of the invention, said energy absorbing module including at least one further fuse element connected in series with said at least one MOV.

Said back-up module including at least one fuse element connected in series with said at least one MOV.

The circuit includes a galvanic isolation module connected in series with said energy absorbing module, connected between said energy absorbing module and earth.

Said galvanic isolation module includes at least one further switching device.

The further switching device comprises a gas arrester (GDT).

The invention will be described in greater detail by description of an embodiment with reference to the accompanying drawings, wherein
- Fig. 1: shows a schematic and exemplary circuit scheme of an overvoltage protection circuit according to the invention,
- Fig. 2: shows a graph showing the effect of the circuit of figure 1 when a transient surge pulse is applied.

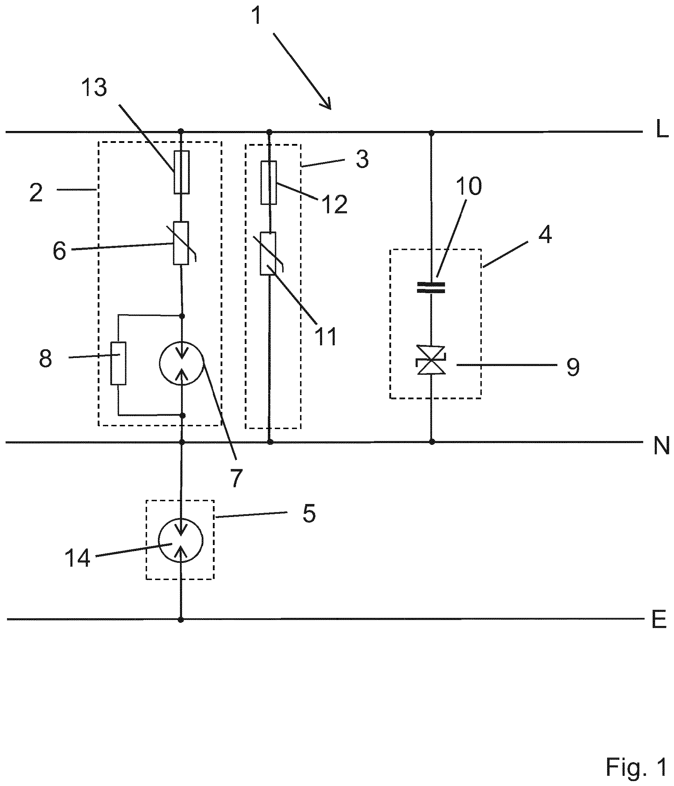

Figure 1 shows an overvoltage protection circuit 1 in AC power supply, the AC power supply having a phase line L, a neutral line N and an earth line E.

The overvoltage protection circuit 1 includes an energy-absorbing module 2, a backup module 3, a transient discriminative module 4 and an isolation module 5. The energy absorbing module 2, backup module 3 and transient discriminative module 4 are connected in parallel between the phase line L and the neutral line N. The isolation module 5 is connected in series to the energy absorbing module 2, backup module 3 and transient discriminative module 4, between the neutral line N and the earth line E.

The energy-absorbing module 2 includes a metal-oxide varistor (MOV) 6 and a gas arrestor 7, also described as a gas discharge tube GDT, connected in series with the MOV 6.

Considering that, under normal circumstances, the MOV 6 is low impedance and the GDT 7 is high impedance, then under normal operating conditions, i.e. no surge occurring, all the voltage between the phase line L and the neutral line N appears on the GDT 7. To make sure that this does not switch into conductive state under normal conditions, one would have to select a GDT element with a high DC sparkover. Then its impulse sparkover will also be high. If a transient surge pulse occurred, it would then turn on only at a relatively high impulse sparkover voltage of, for example, 1000V, so up to this high turn-on voltage the transient surge pulse would stress the electrical equipment connected to the power supply. In order to avoid that, there is a resistor 8 connected in parallel to the GDT 7. The resistor 8 creates a potential divider with the MOV 6, which shares the voltage roughly equally across the MOV 6 and the GDT 7 components under normal conditions. This allows to fit a GDT 7 component with a lower DC sparkover and lower impulse sparkover, in the range of 700V to 800V.

This is still relatively high compared to a target clamping level of 600V to 660V in case of a transient surge.

So for clipping the peak from the GDT 7 action in case of a transient surge, there is the transient discriminative module 4 with a transient voltage suppressor 9, an avalanche diode 9. The TVS 9 component is selected such that it clips the peak voltage to less that 660V and thus results in a lower protection level for the equipment connected to the power supply.

The TVS 9 component has a low energy handling and so is only needed for lightning surge peaks, rated in microseconds.

However, surges are not the only high voltage or overvoltage the overvoltage protection circuit 1 can see. There are also possible failures in the AC power supply that can apply long-duration overvoltages in the range of normal operation frequency of the AC power supply, at a low utility supply frequency range of e.g. 47Hz - 63Hz, preferably at 50Hz for example in a 50Hz network, so-called transient overvoltages or TOV's, which are rated in the milliseconds range and could possibly damage the TVS 9 device.

To find a remedy for this, according to the present invention there is a capacitor 10 connected in series to the TVS 9 in the transient discriminative module 4. The capacitor 10 effectively filters out the TOV's from the surges. This is because in the range of normal operation frequency of the AC power supply, at the low frequencies in the above mentioned range 47Hz - 67Hz, preferably of e.g. 50Hz, it gives a high impedance, so low voltage occurs at the TVS 9 element and no operation of the TVS element will occur. However, if a surge occurs, this has a high frequency component resulting in a low impedance of the capacitor, high voltage occurring at the TVS 9 element, the TVS 9 element will come into operation and clip the peaks from the GDT operation according to its intended function.

In addition, the circuit in the backup module 3 offers redundancy (back-up) protection, if the energy absorbing module 2 should fail or become damaged. The backup module 3 has a series connection of an additional MOV 11 and a fuse element 12.

The energy absorbing module 2 also includes a fuse element 13 connected in series to the MOV 6.

The isolation module 5 has an additional GDT 14, connected in series to the energy absorbing module 2, between the energy absorbing module 2 and the earth line E. This circuit galvanically isolates the energy absorbing module 2 circuit from earth, so no leakage current will occur.

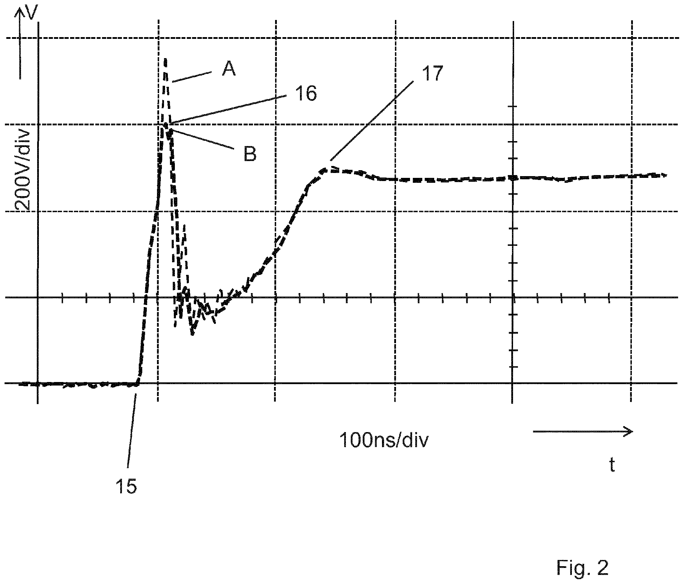

Figure 2 shows in line B an oscilloscope trace of the residual voltage which is applied to the equipment protected by the circuit according to figure 1 when the circuit of figure 1 is subjected to a transient surge pulse of more than 1000V. Line A in figure 2 shows for comparison reasons the trace for a circuit without the transient discriminative module 4.

Each square in figure 2 represents a time of 100ns on the x-axis indicating time t, and 200V on the y-axis representing voltage V.

At point 15 the surge pulse starts. At point 16 the GDT 7 switches from high impedance to low impedance, having a residual voltage drop of about 20V across the GDT 7. The GDT 7 has an impulse sparkover of about 750V. So in curve A, without the transient discriminative module 4, this would be the voltage peak of 750V applied to the equipment.

The effect of the transient discriminative module 4 is seen in curve B of figure 2. The capacitor 10 is in its low impedance state, and the TVS 9 clips the voltage peak to about 600V.

Immediately after ignition of the GDT, the voltage drops to the threshold voltage of the MOV 6, about 200V. With time passing, the MOV 6 voltage will rise as an increasing current flows through the MOV 6, and the rest of the clamping, from point 17 on, is done by the MOV 6 at its clamping voltage of about 480V.

### List of reference signs

- 1: overvoltage protection circuit
- 2: energy absorbing module
- 3: backup module
- 4: transient discriminative module
- 5: isolation module
- 6: MOV
- 7: GDT
- 8: Resistor
- 9: TVS
- 10: Capacitor
- 11: further MOV
- 12: Fuse
- 13: Fuse
- 14: further GDT
- 15: Point in time
- 16: Point in time
- 17: Point in time

## Claims

1. An overvoltage protection circuit (1) comprising at least one energy-absorbing module (2), said energy-absorbing module (2) including:
- at least one metal-oxide varistor, MOV (6),
- a gas arrestor (7) connected in series with said at least one MOV (6), said overvoltage protection circuit (1) further including a transient discriminative module (4) connected in parallel with the energy-absorbing module (2), said transient discriminative module (4) including an avalanche diode (9),
wherein
- the said at least one energy-absorbing module (2) includes a resistance (8) in parallel with said gas arrestor (7),
and wherein
- the circuit (1) including a back-up module (3) connected in parallel with said energy-absorbing module (2), said backup module (3) including at least one further metal-oxide varistor (MOV) (11),
**characterized in that**
the circuit in the back-up module (3) is configured to offer a redundancy protection, if the energy-absorbing module (2) fails, wherein said back-up module (3) includes at least one fuse element (12) connected in series with said at least one further MOV(11), wherein the said transient discriminative module (4) includes a series connection of the avalanche diode (9) and a capacitor (10), wherein said circuit (1) includes an isolation module (5) connected in series with said energy-absorbing module (2), connected between said energy-absorbing module (2) and earth (E), wherein said isolation module (5) includes at least one further switching device (14) and wherein the further switching device (14) comprises a further gas arrester (GDT) (14).

2. A circuit (1) according to claim 1, wherein said energy-absorbing module (2) and said transient discriminative module (4) are connected across an AC power supply (L, N).

3. A circuit (1) according to claim 2, wherein said energy-absorbing module (2) and said transient discriminative module (4) are connected across two power lines of an AC power supply or across a power line (L) and the neutral line (N) of an AC power supply.

4. A circuit (1) according to claim 1, wherein said energy-absorbing module (2) includes at least one further fuse element (13) connected in series with said at least one MOV (6).

5. A method of protecting electrical equipment from overvoltages caused by transient surges on power lines (L, N) of an AC power supply, including the steps of
- connecting at least one metal oxide varistor, MOV (6) across power lines (L, N) to absorb energy from a transient,
- connecting a switching device (7) in series with said at least one MOV (6) to isolate said at least one MOV (6) from the AC power supply in the absence of a transient on the power lines, wherein the switching device (7) comprises a gas arrester (7),
- connecting a resistance (8) in parallel with said switching device (7),
- connecting an avalanche diode (9) in parallel to the switching device (7) to provide high speed clipping the peak from the switching device (7) action in case of a transient surge peak voltage occuring,
including the step of connecting a further MOV (11) in parallel to the series connection of the MOV (6) and the switching device (7) in parallel with the resistor (8),
**characterized in that**
a back-up module (3), including the further metal-oxide varistor (MOV) (11), offers a redundancy protection, if an energy-absorbing module (2), including the at least one metal-oxide varistor (MOV) (6) and the switching device (7), fails, wherein a capacitor (10) is connected in series to the avalanche diode (9) to filter out transient overvoltages in a low frequency region from transient surge peak voltages, and that a further switching device (14) is connected in series to the switching device (7) between the switching device (7) and earth (E), wherein the further switching device (14) comprises a further gas arrester (14).

## Patentansprüche

1. Überspannungsschutzschaltung (1), die mindestens ein energieabsorbierendes Modul (2) umfasst, wobei das energieabsorbierende Modul (2) beinhaltet:
- mindestens einen Metalloxidvaristor, MOV (6),
- einen Gasableiter (7), der mit dem mindestens einen MOV (6) in Reihe geschaltet ist, wobei die Überspannungsschutzschaltung (1) ferner ein transientendiskriminierendes Modul (4) beinhaltet, das parallel zu dem energieabsorbierenden Modul (2) geschaltet ist, wobei das transientendiskriminierende Modul (4) eine Avalanche-Diode (9) beinhaltet,
wobei
- das mindestens eine energieabsorbierende Modul (2) einen Widerstand (8) parallel zu dem Gasableiter (7) beinhaltet,
und wobei
- die Schaltung (1) ein Reservemodul (3) beinhaltet, das parallel zu dem energieabsorbierenden Modul (2) geschaltet ist, wobei das Reservemodul (3) mindestens einen weiteren Metalloxidvaristor (MOV) (11) beinhaltet, **dadurch gekennzeichnet, dass**
die Schaltung in dem Reservemodul (3) dazu ausgelegt ist, einen Redundanzschutz zu bieten, wenn das energieabsorbierende Modul (2) ausfällt, wobei das Reservemodul (3) mindestens ein Sicherungselement (12) beinhaltet, das mit dem mindestens einen weiteren MOV (11) in Reihe geschaltet ist, wobei das transientendiskriminierende Modul (4) eine Reihenschaltung aus der Avalanche-Diode (9) und einem Kondensator (10) beinhaltet, wobei die Schaltung (1) ein Isolationsmodul (5) beinhaltet, das mit dem energieabsorbierenden Modul (2) in Reihe geschaltet ist und zwischen dem energieabsorbierenden Modul (2) und Erde (E) angeschlossen ist, wobei das Isolationsmodul (5) mindestens eine weitere Schaltvorrichtung (14) umfasst und wobei die weitere Schaltvorrichtung (14) einen weiteren Gasableiter (GDT) (14) beinhaltet.

2. Schaltung (1) nach Anspruch 1, wobei das energieabsorbierende Modul (2) und das transientendiskriminierende Modul (4) an eine Wechselstromversorgung (L, N) angeschlossen sind.

3. Schaltung (1) nach Anspruch 2, wobei das energieabsorbierende Modul (2) und das transientendiskriminierende Modul (4) über zwei Stromleitungen einer Wechselstromversorgung oder über eine Stromleitung (L) und die Nullleitung (N) einer Wechselstromversorgung angeschlossen sind.

4. Schaltung (1) nach Anspruch 1, wobei das energieabsorbierende Modul (2) mindestens ein weiteres Sicherungselement (13) beinhaltet, das in Reihe mit dem mindestens einen MOV (6) geschaltet ist.

5. Verfahren zum Schutz von elektrischer Ausrüstung vor Überspannungen, die durch transiente Überspannungen auf Stromleitungen (L, N) einer Wechselstromversorgung verursacht werden, das die folgenden Schritte beinhaltet
- Anschließen mindestens eines Metalloxidvaristors, MOV (6), an die Stromleitungen (L, N), um Energie von einer Transiente zu absorbieren,
- Verbinden einer Schaltvorrichtung (7) in Reihe mit dem mindestens einen MOV (6), um den mindestens einen MOV (6) von der Wechselstromversorgung zu isolieren, wenn keine Transiente auf den Stromleitungen auftritt, wobei die Schaltvorrichtung (7) einen Gasableiter (7) umfasst,
- Parallelschalten eines Widerstands (8) zu der Schaltvorrichtung (7),
- Parallelschalten einer Avalanche-Diode (9) zu der Schaltvorrichtung (7), um im Falle des Auftretens einer transienten Stoß-Spitzenspannung eine Hochgeschwindigkeitsbegrenzung der Spitze der Handlung der Schaltvorrichtung (7) bereitzustellen,
Beinhalten des Schrittes des Parallelschaltens eines weiteren MOV (11) zu der Reihenschaltung des MOV (6) und des Parallelschaltens der Schaltvorrichtung (7) zu dem Widerstand (8),
**dadurch gekennzeichnet, dass**
ein Reservemodul (3), das den weiteren Metalloxidvaristor (MOV) (11) beinhaltet, einen Redundanzschutz bietet, wenn ein energieabsorbierendes Modul (2), das den mindestens einen Metalloxidvaristor (MOV) (6) und die Schaltvorrichtung (7) beinhaltet, ausfällt, wobei ein Kondensator (10) in Reihe mit der Avalanche-Diode (9) geschaltet ist, um transiente Überspannungen in einem Niederfrequenzbereich aus transienten Überspannungsspitzen herauszufiltern, und dass eine weitere Schaltvorrichtung (14) in Reihe mit der Schaltvorrichtung (7) zwischen der Schaltvorrichtung (7) und Erde (E) geschaltet ist, wobei die weitere Schaltvorrichtung (14) einen weiteren Gasableiter (14) umfasst.

## Revendications

1. Circuit de protection contre les surtensions (1) comprenant au moins un module d'absorption d'énergie (2), ledit module d'absorption d'énergie (2) comprenant :
- au moins une varistance à oxyde métallique, MOV, (6),
- un limiteur à gaz (7) connecté en série avec ladite au moins une MOV (6), ledit circuit de protection contre les surtensions (1) comprenant en outre un module de discrimination des transitoires (4) connecté en parallèle avec le module d'absorption d'énergie (2), ledit module de discrimination des transitoires (4) comprenant une diode à avalanche (9), où :
- ledit au moins un module d'absorption d'énergie (2) comprend une résistance (8) en parallèle avec ledit limiteur à gaz (7),
et où :
- le circuit (1) comprend un module de secours (3) connecté en parallèle avec ledit module d'absorption d'énergie (2), ledit module de secours (3) comprenant au moins une autre varistance à oxyde métallique, MOV, (11), **caractérisé en ce que** :
le circuit du module de secours (3) est configuré pour offrir une protection redondante en cas de défaillance du module d'absorption d'énergie (2), où ledit module de secours (3) comprend au moins un élément fusible (12) connecté en série avec ledit au moins un autre MOV(11), où ledit module de discrimination des transitoires (4) comprend une connexion en série de la diode à avalanche (9) et d'un condensateur (10), où ledit circuit (1) comprend un module d'isolation (5) connecté en série avec ledit module d'absorption d'énergie (2), connecté entre ledit module d'absorption d'énergie (2) et la terre (E), où ledit module d'isolation (5) comprend au moins un autre dispositif de commutation (14) et où l'autre dispositif de commutation (14) comprend un autre limiteur à gaz (GDT) (14).

2. Circuit (1) selon la revendication 1, dans lequel ledit module d'absorption d'énergie (2) et ledit module de discrimination des transitoires (4) sont connectés à une alimentation en courant alternatif (L, N).

3. Circuit (1) selon la revendication 2, dans lequel ledit module d'absorption d'énergie (2) et ledit module de discrimination des transitoires (4) sont connectés à deux lignes d'alimentation d'une alimentation en courant alternatif ou à une ligne d'alimentation (L) et la ligne neutre (N) d'une alimentation en courant alternatif.

4. Circuit (1) selon la revendication 1, dans lequel ledit module d'absorption d'énergie (2) comprend au moins un autre élément fusible (13) connecté en série avec ladite au moins une MOV (6).

5. Procédé de protection d'un équipement électrique contre les surtensions causées par des surtensions transitoires sur les lignes d'alimentation (L, N) d'une alimentation en courant alternatif, le procédé comprenant les étapes suivantes :
- connecter au moins une varistance à oxyde métallique, MOV, (6) aux lignes électriques (L, N) pour absorber l'énergie d'une transitoire,
- connecter un dispositif de commutation (7) en série avec ladite au moins une MOV (6) pour isoler ladite au moins une MOV (6) de l'alimentation en courant alternatif en l'absence d'une transitoire sur les lignes électriques, où le dispositif de commutation (7) comprend un limiteur à gaz (7),
- connecter une résistance (8) en parallèle avec ledit dispositif de commutation (7),
- connecter une diode à avalanche (9) en parallèle avec le dispositif de commutation (7) pour fournir un écrêtage à grande vitesse du pic de l'action du dispositif de commutation (7) en cas de survenue d'un pic de tension transitoire,
le procédé incluant l'étape comprenant de connecter une autre MOV (11) en parallèle à la connexion en série de la MOV (6) et le dispositif de commutation (7) en parallèle avec la résistance (8),
**caractérisé en ce que** :
un module de secours (3), comprenant la varistance à oxyde métallique supplémentaire, MOV, (11) offre une protection redondante en cas de défaillance d'un module d'absorption d'énergie (2), comprenant l'au moins une varistance à oxyde métallique, MOV, (6) et le dispositif de commutation (7), où un condensateur (10) est connecté en série à la diode à avalanche (9) pour filtrer les surtensions transitoires dans une région de basse fréquence des pics de tension transitoires,
et **en ce qu'**un autre dispositif de commutation (14) est connecté en série au dispositif de commutation (7) entre le dispositif de commutation (7) et la terre (E), où l'autre dispositif de commutation (14) comprend un autre limiteur à gaz (14).
